# EUROPEAN PATENT APPLICATION

(11) **EP 4 741 761 A1**
(43) Date of publication of application: **13.05.2026**
(21) Application number: 24211571.5
(22) Date of filing: 07.11.2024
(51) Int. Cl.: G01C 5/00, G01C 21/30, G01S 17/88

(54) **METHOD, DEVICE AND SYSTEM FOR DETERMINING AN ELEVATION OF A ROAD PORTION USED BY A VEHICLE**

(71) Applicant: Valeo Comfort and Driving Assistance, 94000 Créteil (FR)
(72) Inventor: STRUNCK, Sebastian, 94000 Créteil (FR); YANG, Kansheng, 94000 Créteil (FR)
(74) Representative: Delaval, Guillaume Laurent

(57) **Abstract**

A method (200) for determining an elevation of a road portion used by a vehicle, said method (200) comprising the following steps:
- detecting (201) signals emitted by at least two respective ground-based transmitters, said ground-based transceivers being each positioned at distinct elevations,
- comparing (206) the detected signals to determine the signal having the highest power,
- determining (208) the elevation of the road portion based on the comparison

## Description

### TECHNICAL FIELD OF THE INVENTION

The invention relates to a method for determining an elevation of a road portion used by a vehicle. The invention also relates to a device and a system for determining an elevation of a road portion used by a vehicle.

### BACKGROUND INFORMATION AND PRIOR ART

Methods are known for determining an elevation of a road portion on which a vehicle is driving. These methods often use the road portion position as determined by a receiver receiving signals from satellites in a satellite positioning system and then use data from a map to determine the altitude associated to this road portion. These methods are functional, but they do not work very well when the vehicle is driving under a bridge or on a bottom layer of a multi-layer road. Thus, these methods are not accurate.

In addition, these methods use several data and measurements from additional sensors and thus can demand extra cost and are not easy to implement.

The invention is intended to remedy at least one of the aforementioned drawbacks.

### SUMMARY OF THE INVENTION

In an embodiment, the invention provides a method for determining an elevation of a road portion used by a vehicle, said method comprising the following steps:
- detecting signals emitted by at least two respective ground-based transmitters, said ground-based transceivers being each positioned at distinct elevations,
- comparing the detected signals to determine the signal having the highest power,
- determining the elevation of the road portion based on the comparison.

By using the signal having the highest power, it is possible to differentiate between situations (e.g. to assess whether the vehicle is driving under a bridge or on a bottom layer of a multi-road layer) and determine the elevation of the road portion used by the vehicle.

The method according to the invention is thus easy to implement and does not demand extra cost. In addition, it allows easily determining which road portion is followed by the vehicle in a multi-layer road.

According to an embodiment, each detected signal comprises data relative to the position of the given ground-based transmitter, the determined elevation being further based on the data relative to the position.

Thus, the elevation may be determined (in practice) by using the data recorded in the signal having the highest power. Therefore, the method is easily implemented and does not need a lot of processing to determine the elevation of the road portion used by the vehicle.

According to this embodiment, before the step of comparing, the method may comprise a step of selecting the detected signals having at least one spatial coordinate in common, preferably two spatial coordinates in common, said step of comparing being carried out on the signals selected in this step of selecting.

According to an embodiment, the method further comprises, before the step of comparing, checking each detected signal for transmission errors and/or loss of data and selecting the detected signals that are free from transmission error or loss of data, said step of comparing being carried out on the signals selected in this step of selecting.

According to this embodiment, the method may further comprise:
- recording the non-selected signals in a library, and
- discarding each current received signal that matches with one of the signals recorded in the library.

According to an embodiment, wherein the elevation of the road portion is shared with a network.

According to an embodiment, the different ground-based transmitters are each comprised in a road side unit and/or the device is an on-board device.

According to an embodiment, the different ground-based transmitters are each comprised in an on-board device and/or the device is a road side unit.

A further object of the invention is to provide a device for detecting an elevation of road portion used by a vehicle, said device comprising:
- a receiver configured to:
   i) detect signals respectively emitted by different ground-based transmitters,
   ii) compare the detected signals to determine the signal having the highest power,
- a controller configured to determine the elevation of the road portion based on the comparison.

According to an embodiment, each detected signal comprises data relative to the position of the given ground-based transmitter, said elevation of the road portion being further based on the data relative to the position.

According to an embodiment, the device comprises a radio transmitter configured to emit signal, said transmitter comprising at least one dipole antenna.

According to this embodiment, the at least one dipole antenna may be configured to operate on the one hand, in reception, to receive the signals from the ground-based transmitter, and, on the other hand, in transmission to transmit the signal emitted by the transmitter of the device.

According to an embodiment, the at least one-half wave dipole antenna has a first dimension higher than a second dimension, said first dimension being oriented along a vertical direction.

According to an embodiment, the different ground-based transmitters are each comprised in a road side unit and the device is an on-bord device.

According to an embodiment, the different ground-based transmitters are each comprised in an on-bord device and the device is a road side unit.

A further object of the invention is to provide a system for determining an elevation of a road used by a vehicle, said system comprising:
- at least two road side unit ground-based transmitters, each ground-based transmitters being arranged to emit a signal,
- an on-board device according to the present disclosure and comprised in the vehicle.

According to this embodiment, each ground-based transmitters comprises at least one dipole antenna having a first dimension higher than a second dimension, said first dimension being oriented along a vertical direction, said first dimension being higher than or equal to λ/2 (preferably higher than or equal to 5λ/2) , where λ corresponding to the wavelength of the operating frequency of the at least one antenna.

### DETAILED DESCRIPTION OF EXAMPLES

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a system according to the present disclosure;
- Figure 2 shows a schematic view of an antenna comprised in an Road Side Unit of the system of figure 1;
- Figure 3 shows a schematic view of an embodiment of a method according to the present disclosure;
- Figure 4 shows a schematic view of a multi-layer road having an upper road portion and a bottom road portion;
- Figure 5 shows a schematic view of signals received by a device of a vehicle driving on the bottom road portion shown on figure 4.

In the present disclosure, the vertical will be defined by an axis A1 oriented perpendicularly to the floor of the vehicle (for an on-board device), when the latter rests on its wheels on a horizontal road or perpendicularly to the ground supporting the support of the road side unit. In contrast, the horizontal is defined by a plane P1 oriented perpendicularly to the axis A1.

### System

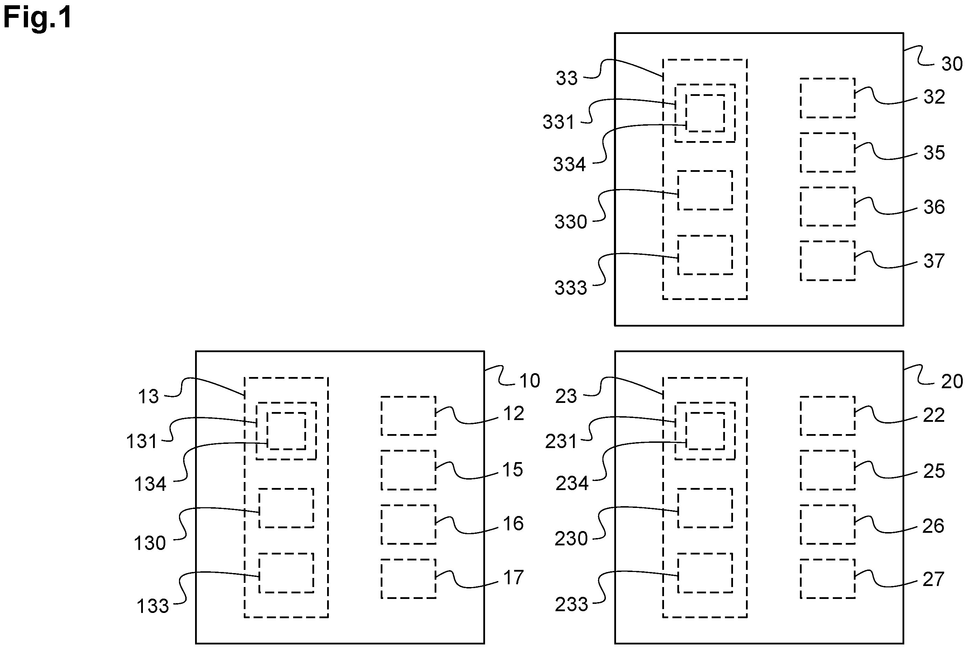

Figure 1 shows an example of a system 100 for determining an elevation of a road portion used by a vehicle.

The system 100 illustrated in figure 1 comprises a device 10, that here corresponds to an on-board device comprised in a vehicle 1 that uses the road portion.

By road portion, it is meant a real road defined by an elevation (or altitude), defined according to the z dimension, and an area defined as a plane according to dimension x, y (x, y). This area is defined in the plane P1 described above and is approximately comprised between 10m² and 30m². Typically, the road portion gives an information of a specific layer of a multi-layer road.

By multi-layer road, it is meant a road having different levels referred to as layer of the road. Of course, a multi-layer road can also pertain to a car park split into different levels.

In this example, the device 10 is a device for detecting the road portion used by a vehicle 1.

The device 10 comprises a controller 12 and a receiver 130, and optionally a transmitter 131. Optionally, the device 10 may further comprise at least one of the following elements: a storage means 15, a wireless communication unit 16, a GPS receiver 17, for instance configured to receive signals from satellites of a satellite positioning system (corresponding to a Global Navigation Satellite System (GNSS) or a Global Positioning System (GPS)). For instance, the data received from the GPS receiver may be correlated with the elevation determined by the device 10 .

By controller 12 (or 133 described below), it is meant a computer or a processor or a central processing unit (CPU) or any electronic device allowing to implement a succession of commands and/or calculations. Typically, the controller 12 comprises a processor, a memory and different input and output interfaces. The input and output interfaces may be points of connection allowing the controller 12 to receive data and send commands to the different elements of the device 10.

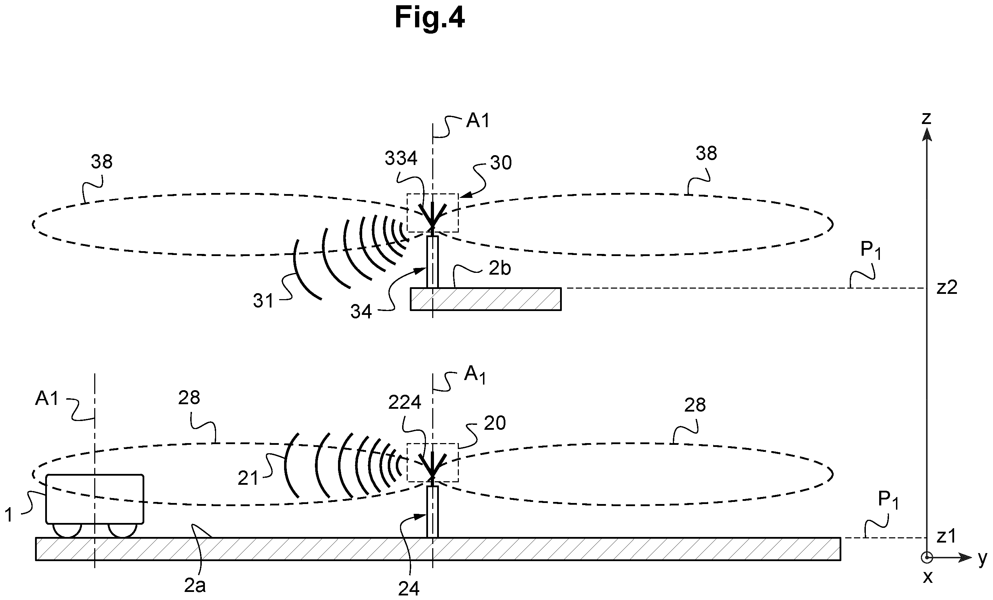

In the present disclosure, the receiver 130 is configured to receive signals from at least two ground-based transmitters positioned outside the vehicle 1. By "ground-based", it is meant "based on the ground" or "terrestrial". Thus, a ground-based transmitter is a terrestrial transmitter supported by the ground (for example via a support 24, 34 shown on figure 4). Thus, this transmitter is distinct from a satellite transmitter sending information from elevated position with respect to the Earth (i.e. for instance from the space).

The transmitter 131 is configured to emit signals toward at least one ground-based receiver positioned outside the vehicle 1, for example one signal per second.

Typically here, the receiver 130 and the transmitter 131 constitute a transceiver.

In this example, the receiver 130 and (optionally) the transmitter 131 are comprised in a radio communication module 13 that operates (for instance) in the 5.9 Ghz frequency band, here allocated for vehicular communications. Typically, the radio communication module 13 of the device 10 is arranged to receive signals from ground-based transmitters that use a radio communication module, for instant Road Side Unit (RSU) described below. This radio communication module 13 is coupled to the controller 12 of the device 10.

In the present disclosure, each radio communication module can be a V2x ("Vehicle-to-Everything") communication module or a C-V2X ("Cellular Vehicle-to-Everything") module such as a DSRC ("Dedicated Short Range Communications") radio communication module or a ITS-G5 module ("Intelligent Transport Systems operating in the 5 GHz frequency band" module) or a 3GPP module ("3rd Generation Partnership Project" module) or a Siderlink module.

As illustrated in figure 1, the transmitter 131 comprises an antenna system 134 connected to the receiver 130 and comprising at least one antenna.

Each antenna of the antenna system 134 is configured to operate on the one hand, in reception to receive a radio signal (for instance emitted by ground-based transmitters that will be described below and received by the receiver 130), and, (optionally) on the other hand, in transmission to transmit the radio signal emitted by the transmitter 131 of the device 10.

The at least one antenna may comprise at least one of the following antennas: dipole antenna, or monopole antenna, or loop antenna, or helical antenna or whip antenna. In an embodiment, the at least one antenna is a directional antenna, for instance a half wave dipole antenna (λ/2 antenna) configured to focus a radio signal toward the road portion used by the vehicle 1.

Optionally, the transceiver, made by the receiver 130 and the emitter 131, is configured to modulate and demodulate electrical signals.

In other words, it means that at least the receiver 130, in particular the radio communication module 13, enables data exchange with different ground-based transmitter positioned outside the vehicle 1.

To this end, the radio communication module 13 comprises a processor 133 or a controller or any electronic device allowing to implement a succession of commands and/or calculations. It also comprises a memory connected to the processor 133. When the radio communication module 13 only comprises the receiver 130, it is understood that the processor 133 is comprised in the receiver 130. Typically here, the processor 133 is configured to manage the data exchange with the ground-based transmitters.

In the present disclosure, the receiver 130 of the radio communication module 13 is configured to detect signals emitted by at least two ground-based transmitters. Each detected signal is then analyzed by the radio communication module 13, in particular the receiver 130, to determine the elevation of the road portion used by the vehicle (this will be explained below).

To this end, the system 100 further comprises at least two ground-based transmitters 231, 331, here positioned at distinct elevations but having same spatial coordinates (x, y).

In this example, each ground-based transmitter 231, 331 is comprised in a device 20, 30 (here ground-based device), corresponding each to a Road Side Unit (RSU).

Typically here, each device 20, 30 comprises the same element as the device 10 described above. However, in this example, the device 20 and 30 operate preferably in transmission.

Each device 20, 30 comprises a controller 22, 32, the ground-based transmitter 231, 331 and, optionally, a receiver 230, 230. Optionally, each device 20, 30 may further comprise at least one of the following elements: a storage means 25, 35, a wireless communication unit 26, 36 and a GPS receiver 27, 37 for instance configured to receive signals from satellites of a satellite positioning system (corresponding to a Global Navigation Satellite System (GNSS) or a Global Positioning System (GPS)). The signals from the satellites may comprise data relative to the time (time of reception) and/or the position of the road portion.

Each receiver 230, 330 is configured to receive signals from at least two transmitters, for instance at least two transmitters 131 comprised in two distinct vehicles 1. The receiver 230, 330 may receive several signals simultaneously but is arranged to analyze signals received over a same time period, for instance, a time period of one second.

Each ground-based transmitter 231, 331 is configured to emit signals toward receivers, for instance to a receiver 130 of the vehicle 1.

As for the device 10, the receiver 230, 330 and the ground-based transmitter 231, 331 constitute a transceiver of the device 20, 30.

In this example, the receiver 230, 330 and the ground-based transmitter 231, 331 are comprised in a radio communication module 23, 33 that operates in the 5.9 GHz frequency band, here allocated for vehicular communications. Typically, the radio communication module 23, 30 of each device 20, 30 is, in this example, arranged to emit signals (via its ground-based transmitter 232, 331) toward receivers that uses radio communication module, for instant toward the on-bord device 10 described above. Of course, when the radio communication module 23, 30 comprises a receiver, this radio communication module 23, 30 is also arranged to receive signals from transmitters that use radio communication module, for instant the on-board device 10 described above. These two communication modules 23, 33 comprise each a processor 233, 333 or a controller as described above.

As illustrated in figure 1, each ground-based transmitter 231, 331 comprises an antenna system 234, 334 connected to the receiver 230, 330 and comprising at least one antenna.

Each antenna of the antenna system 234, 334 is configured to operate on the one hand, in transmission, to transmit a radio signal emitted by the transmitter 231, 331 of the device 20, 30, and, (optionally) on the other hand, in reception to receive a radio signal (for instance emitted by the transmitters 131 of devices 10 and received by the receiver 230,330).

Each antenna is arranged to have a maximum gain and/or directivity along the horizontal direction. In other words, it means that the gain and/or the directivity of the antenna along the horizontal direction is higher than the gain and/or the directivity along the vertical direction.

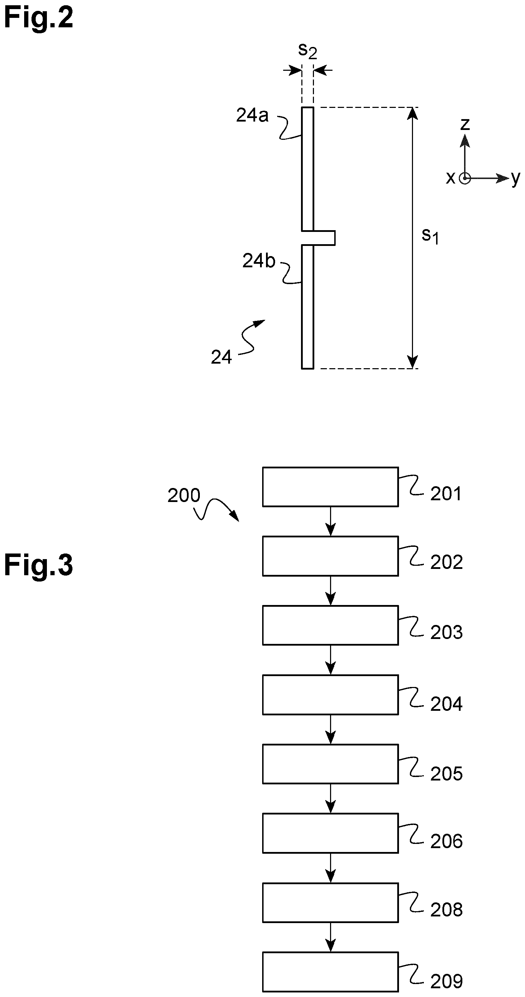

As shown in figure 2, the antenna 24 of the device 20, is made of two metal rods 24a, 24b, for instance of same length, aligned with respect to each other in the direction of extension of the rods so that the antenna 24 has a first dimension s1 extending along a vertical direction and a second dimension s2, perpendicular to the first dimension s1, and extending along a vertical direction. The first dimension s1 oriented along the vertical direction is higher than the second dimension. For instance, the first dimension s1 (corresponding to the length of the two metal rods 24a, 24b) is higher than or equal to λ/2 (λ: lamba corresponding to the wavelength of emission of the ground-based transmitter, e.g. the working frequency of the antenna in reception and emission). If the antenna system 224 comprises several antennas 24, these antennas may be arranged in parallel along the vertical direction. For instance, the first dimension s1 is of 5/2λ. This type of antenna 24 comprises higher gain in horizontal plane (compared to other directional antenna) but less gain for other elevation than horizontal.

This specific arrangement optimizes the gain and/or the emissivity of the antenna along the horizontal direction. In other words, it means that the signal emitted by the ground-based transmitter 231, 331 is high in the horizontal direction but low in the vertical direction (see figure 4). Thus, the signal sent by each ground-based transmitter 231, 331 will have a high power if it is received by an emitter positioned on a same elevation as the given ground-based transmitter and a low power (compared to the high power described above) if it is received by a receiver positioned at another elevation of the given ground-based transmitter 231, 331. For instance, for a ground-based transmitter, the emitting power along the horizontal direction is at least 20 dB (preferably 30 dB) higher than the emitting power along the vertical direction, for a distance between the ground-based transmitter and the emitter of the device comprised between 0 m and 1000 m. Similarly, the received power (received by the device) along the horizontal direction will be at least 20 dB (preferably 30 dB) higher than the received power along the vertical direction.

Typically, here, each ground-based transmitter 231, 331 is configured to emit a signal (radio signal) every second. This signal comprises a code comprising data relative to the position of the ground-based transmitter emitting the signal. For instance, the code comprises the three spatial coordinates (x, y, z) of the given ground-based transmitter 231, 331.

It will be then described below how the device 10 is configured to determine the elevation of the road portion used by the vehicle 1.

The signals emitted by each transmitter 231, 331 are received by the device 10 and then analyzed by the receiver 130 of the device 10.

Here by analyzed, it is meant that the receiver 130 first determines the power of each detected signal, in particular its power strength, and then compares the power of each detected signal to determine the signal that have the highest power. Thus, the receiver 130 is configured to compare the detected signals so as to determine the signal having the highest power.

The receiver 131 is then configured to select the signal having the highest power and to read it. In particular, the processor 133 extracts the code from this signal comprising data relative to the position of the ground-based transmitter that has emitted this signal. Typically, here, the data relative to the position comprises the three spatial coordinates x, y, z of the ground-based transmitter, preferably listed in this order.

These data are then sent to the controller 13 via the processor 133 of the receiver 130.

Assuming that the power of signal emitted by ground-based transmitters positioned at a different level of the receiver 130 is low due to the specific directivity of the antenna of ground-based transmitter 231, 331, the detected signal with the highest power shall be the one which is on the same level of the device 10.

Thus, by extracting the elevation from the signal having the highest power, the controller 13 is arranged to determine the position of the road portion using the data relative to the position of the ground-based transmitter transmitting the selected signal. Typically here, the controller 13 reads the data and signal. This elevation is considered for the controller 13 as the elevation of the road portion used by the vehicle. Optionally, the determined elevation may be correlated with data received from the GPS receiver of the device 10.

As it will be described below, to improve the method implemented by the device 10, the receiver 130 is also configured to check, before comparing the power of the signal, each detected signal for transmission errors and/or loss of data. Typically here, the receiver 130 verifies if each detected signal can be read (i.e. test 1) and if the data associated to this signal comprises the three spatial coordinates x, y, z of the ground-based transmitter 231, 331 (i.e. test 2).

These tests are performed on each detected signal.

If these two tests are positive (i.e. no transmission error and no loss of data are determined), the given detected signal is stored in the memory of the processor 133, for instance in a library of selected signals. In contrast, if one of these tests is negative, this signal is unselected by the receiver 130 for the comparison explained above. It means that this signal will no longer be analyzed by the device 10. However, this signal can be recorded in the memory of the receiver 130, for example in a library of non-selected signals.

To limit the number of comparisons carried out by receiver 130, each detected signal may be briefly analyzed, by the receiver 130. For instance, each signal received by the receiver 130 may be compared to signals recorded in the library of the non-selected signals. To this end, the receiver 130 is configured to discard each current received signal that matches with one of the signals recorded in the library.

Alternatively, or in combination, the receiver 130 may be configured to compare the data of the selected signals, for instance those who are stored in the library of the selected signals. To this end, before the comparison, the receiver 130 may be configured to select the signal that has at least one spatial coordinate in common, preferably two spatial coordinates in common. To this end, the receiver 130 browses the data associated to each signal stored in the library of the selected signals and select all the signals having the first or second (preferably both) spatial coordinate(s) in common. These selected signals will be then used in the comparison to determine the signal having the highest power as described above.

### Process

It will be described with figure 3 an embodiment of a method 200 for detecting a road portion used by a vehicle.

The method 200 shown in figure 3 is typically implemented by the device 10 illustrated by figure 1.

The method 100 comprises a step of detecting 201 signals emitted by at least two ground-based transmitters 231, 331. By detecting a signal, it is meant that this signal is captured by the receiver. In other words, it means that the receiver 130 can capture, process and interpret this received signal to extract information from this signal.

After detecting 201 the signals, the method 100 comprises a step of comparing 206 the detected signals to determine the signal having the highest power. Typically, when the receiver 130 detects a signal, it also determines the power of this detected signal. Then, he compares the power of all the detected signals to determine the signal having the highest power.

To improve the method 100, the comparison may be performed on detected signals received over a determined time period, for example over a time period comprised between 0,9 second and 2 seconds, preferably of 1 second (here of 1 second). Thus, the receiver 130 only compares detected signals received over a same time period (here for instance a time period of 1 second). To improve the accuracy of the comparison, a value for the uncertainty may be determined based on the accuracy of the measurement and the time difference (based on speed and direction of the vehicle).

Then, after comparing 206, the method 200 comprises a step of determining 208 by the controller 13 the elevation of the road portion used by the vehicle based on the comparison.

Especially here, after determining the signal having the highest power, the receiver 130 reads the data recorded in this signal and extracts the data relative to the position of the ground-based transmitter 231 that has emitted the signal having the highest power. These data are sent by the processor 133 of the receiver 131 to the controller 13 of the device 10 that will use these data to determine the elevation of the road portion.

As these data comprise the three spatial coordinates of the ground-based transmitter 231, the controller 13 selects the spatial coordinate according to the z dimension (here corresponding to the third spatial coordinates of the data sent to the controller 13) and attributes this spatial coordinate to the elevation of the road used by the vehicle.

To improve the method 100, before the step of comparing 206, the method 100 shown on figure 3 comprises checking 203 each detected signal for transmission errors and/or loss of data and selecting 204 the detected signals that are free from transmission error and/or loss of data.

For instance, to determine transmission error, the receiver 130 determines if it can extract (or read) the code (here the data relative to the position) from ambient noise comprised in the signal. If it can, it means that the signal does not have transmission error, the receiver 130 can read it.

To determine loss of data, the receiver 130 reads each detected signal (after the evaluation of the transmission error) and extracts from each signal the data relative to the position of the ground-based transmitter 231, 331 that has emitted the given signal. These data have a specific signature (form) and must comprise, in this order, the position according to dimension x of the ground-based transmitter 231, 331, the position according to dimension y of the ground-based transmitter 231, 331 and the position according to dimension z of the ground-based transmitter 231, 331. If the receiver 130 can extract the three spatial coordinates from the signal, it means that the detected signal is complete (i.e. there is no loss of data).

Preferably, the selected signals are recorded in a library of selected signals and the non-selected recorded in a library of non-selected signals. As explained above, in the library of the selected signals, each detected signal is associated with the data relative to the position. In the library of the non-selected signals, each signal is associated with data that can be extracted from this signal and/or information explaining why this signal has been unselected by the receiver 130. For example, it can be stored the result of the test of the transmission error and the test of the loss of data.

Thus, in the step of selecting 204, after analyzing the transmission error and/or the loss of data, the receiver 130 sorts each detected signal and records each signal into two distinctive lists of data, one corresponding to signals that have been selected in the step of selecting 204 (e.g. signals free of any transmission error and/or loss of data) and the other corresponding to signals that have not been selected in the step of selecting 204. These two lists form the libraries described above.

Optionally, before the step of comparing 206, the method 100 comprises a step of selecting 205 the detected signals having at least one spatial coordinate in common (in the exception of the elevation). Typically, the receiver 130 uses the library of the selected signals. Thus, for the comparison of the step of comparing 206, the receiver 130 browses the library of the selected signals and selects all the signals having at least one spatial coordinate according to x dimension or y dimension (here corresponding to the first two data of the data relative to the position) in common by reading the first and/or the second spatial coordinate of the data. In a preferred embodiment, the receiver 130 selects the detected signals having two spatial coordinates x,y in common. After selecting 205 the signals having the two spatial coordinates x,y in common, the receiver 130 carries out the step of comparing 206. This improves the accuracy of the method 200 and its computation time.

To limit the processing of the device 10, the receiver 130 may also use the data stored in the library of the non-selected signal.

For instance, after receiving a current signal, the receiver 130 verifies if this current received signal has already been discarded from the comparison. To this end, the method comprises a step of discarding 202 each current received signal that matches with one of the signals recorded in the library of the non-selected signal. Typically, here, the receiver 130 compares each current detected signal to the signals recorded in the library of the non-selected signal and verifies if this current detected signal matches with one of the signals of the library of the non-selected signal. If this current signal matches with one of the recorded signals, the receiver 130 discards this signal from the comparison. In other words, it means that this detected signal is neither analyzed by the receiver 130 nor compared to other signals. This avoids processing this current signal.

Optionally, the method 200 further comprises a step of sharing 209 information with a network.

Typically, the network can be any element than can be connected to the vehicle via the wireless communication unit 16 of the device 10. For example, the network can comprise infrastructures or vehicles close to the vehicle and able to communicate with the vehicle via the V2X technology, or it can be a remote server, or pedestrians having smart device.

The step of sharing 209 is configured to exchange information, for instance via Basic Safety Message (BSM) and/or Cooperative Awareness Message (CAM). For example, the elevation of the road portion determined in the step of determining 208 is shared with other vehicles and/or with the ground-based transmitters. In particular, the road portion provided at the end of the step of determining 208 can be shared with adjacent vehicles, for example vehicles driving in the same road portion used by the vehicle comprising the device 10 or vehicle spaced by less than 20 meters from the vehicle comprising the device 10. In a variant, the determined position can be shared with a remote server or smart device of pedestrians closed to the vehicle or with the device 20, 30 described above.

In this step of sharing 209, each device 10 may be configurated to update its position (in particular, its elevation (along the third spatial coordinate z)) and share this update elevation in the BSM/CAM message.

It will be described with reference to figures 4 to 5, an implementation example of the method 200.

Figure 4 shows a multi-layer road comprising a bottom road portion 2a and an upper road portion 2b.

In figure 4, a vehicle 1a is driving on the bottom road portion 2a, which is covered by the upper road portion 2a. The vehicle 1a comprises a device 10 as described above.

The device 20 described above is supported by a support 24 (ground support) and is positioned on an edge of the bottom road portion 2a and the device 30 disclosed above is supported by a support 34 (ground support) and is positioned on an edge of the upper road portion 2b. The supports 24, 34 of the devices 20, 30 are similar and each of the device 20, 30 are a road side units and positioned at a same position on the given support 24, 34. It is understood that the elevation of the each of the devices 20, 30 corresponds to the elevation of the road 2a, 2b on which is positioned the device 20, 30. This elevation corresponds to the elevation of the end of the given support 24, 34 connecting to the given road 2a, 2b. In the example described here, the two devices 20, 30 are spaced from each other (in height) from 9m. Typically, this space corresponds to the space between the ground of the bottom road portion 2a and the upper road portion 2b.

Thus, each device 20, 30 has a spatial coordinate including two spatial coordinates, in the x dimension x and y dimension, and an elevation coordinate in the z dimension. Here, the devices 20, 30 have same spatial coordinates in the x and y dimensions (x, y) but a different elevation coordinate in the z dimension. Indeed, the first ground-based transmitter 231 is located at an elevation z1 while the second ground-based transmitter 331 is located at ab elevation z2. Typically, this elevation is measured in reference to the Mean See Level (MSL).

Figure 4 shows the directivity of the antenna system 234, 334 of each device 20, 30. It can be seen that each antenna system has an emissivity 28, 38 extending principally along the horizontal direction.

As illustrated in figure 4, the receiver 130 receives a first signal 21 from the first ground-based transmitter 231 one hand, and on the other hand a second signal 31 from the second ground-based transmitter 331.

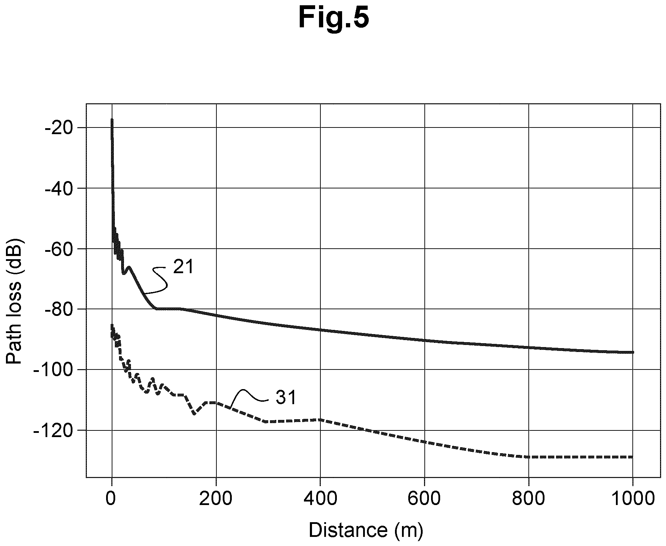

Typically figure 5 shows the variation of the path loss of the first signal 21 (gaussian signal) that propagates into the air at the ambient temperature of 21 degrees Celsius and the variation of the path loss of the second signal 31 (gaussian signal) that propagates into the air at the ambient temperature of 21 degrees. The paths losses are determined as described in the document *"Two ray ground reflection model"* Mathuranathan. The abscissa axe shows the distance between the given ground-based transmitter 231, 331 emitting the given signal 21, 31 and the receiver 130 (for example calculated in the plan (y, z)). Thus, each path loss describes the attenuation of the given signal 21, 31 as a function of the distance between the given ground-based transmitter 231, 331 and receiver 130.

In this embodiment, there is a difference of 30 dB between the gain of the antenna of the first signal and the gain of the antenna of the second signal due to the position of the ground-based transmitter 231, 331 (impacting the receiving angle).

As it can be seen in figure 5, the greater the distance, the more the path loss of the first 21 and second 31 signals decreases. However, it can be seen that each path loss increases with distance. Here, the second signal 31 always has a greater attenuation than the first signal 21. Typically, there is at least a 20 dB difference between the two curves of path loss. It means that the power from a ground-based transmitter positioned in the same elevation of the device 10 is at least 20dB higher than the power from a ground-based transmitter positioned in another elevation (different elevation than the device). This is due to the fact that, on one hand, the distance between the transceiver 231 and the receiver 130 is always lower than the distance between the transceiver 331 and the receiver 130 and on the other hand that the gain and/or the emissivity of the antenna system of each device 20, 30 is lower along the vertical direction (compared to the gain and/or the emissivity along the horizontal direction).

Thus, for the vehicle 1 shown in figure 4, the power of the first signal 21 received by the device 10 is always higher than the power of the second signal 31 received by the device 10.

## Claims

1. A method (200) for determining an elevation of a road portion (2a, 2b) used by a vehicle (1), said method (200) comprising the following steps:
- detecting (201) signals (21, 31) emitted by at least two respective ground-based transmitters (231, 331), said ground-based transceivers (231, 331) being each positioned at distinct elevations,
- comparing (206) the detected signals (21, 31) to determine the signal (21) having the highest power,
- determining (208) the elevation of the road portion (2a, 2b) based on the comparison.

2. Method (200) according to claim 1, wherein each detected signal (21, 31) comprises data relative to the position of the given ground-based transmitter (231, 331), the determined elevation being further based on the data relative to the position.

3. Method (200) according to claim 2, wherein, before the step of comparing (206), the method (200) comprises a step of selecting (205) the detected signals (21, 31) having at least one spatial coordinate in common, said step of comparing (206) being carried out on the signals (21, 31) selected in this step of selecting (205).

4. Method (200) according to any one of claims 1 to 3, wherein the method (200) further comprises, before the step of comparing (206), checking (203) each detected signal (21, 31) for transmission errors or loss of data and selecting the detected signals (21, 31) that are free from transmission error or loss of data, said step of comparing (206) being carried out on the signals (21, 31) selected in this step of selecting (205).

5. Method (200) according to claim 4, wherein the method (200) further comprises:
- recording the non-selected signals in a library, and
- discarding (202) each current received signal that matches with one of the signals recorded in the library.

6. Method (200) according to any one of the 1 to 6, wherein the elevation of the road portion is shared with a network.

7. Method (200) according to any one of claims 1 to 5, wherein the different ground-based transmitters (231, 331) are each comprised in a road side unit (20, 30).

8. Device (10) for detecting an elevation of road portion used by a vehicle, said device comprising:
- a receiver (130) configured to:
i) detect signals respectively emitted by different ground-based transmitters (231, 331),
ii) compare the detected signals to determine the signal having the highest power,
- a controller (13) configured to determine the elevation of the road portion based on the comparison.

9. Device (10) according to claim 8, wherein each detected signal comprises data relative to the position of the given ground-based transmitter (231, 331), said elevation of the road portion being further based on the data relative to the position.

10. Device (10) according to any one of claim 8 or 9, comprising a radio transmitter (131) configured to emit signal, said transmitter (131) comprising at least one dipole antenna.

11. Device (10) according to claim 10, wherein the at least one dipole antenna is configured to operate on the one hand, in reception, to receive the signals from the ground-based transmitter (231, 331), and, on the other hand, in transmission to transmit the signal emitted by the transmitter (131) of the device (10).

12. Device according to claim 10 or 11, wherein the at least one-half wave dipole antenna has a first dimension higher than a second dimension, said first dimension being oriented along a vertical direction.

13. Device (10) according to any one of claims 8 to 12, wherein the device (10) is an on-board device of the vehicle, and the ground-based transmitter are road side unit (20, 30).

14. System (100) for determining an elevation of a road used by a vehicle, said system comprising:
- at least two ground-based transmitters (231, 331), each ground-based transmitters (231, 331) being arranged to emit a signal,
- an on-board device (10) according to any one of claims 8 to 13 and comprised in the vehicle.

15. System (100) according to claim 14, wherein each ground-based transmitters (231, 331) comprises at least one dipole antenna having a first dimension higher than a second dimension, said first dimension being oriented along a vertical direction, said first dimension being higher than or equal to λ/2, where λ corresponding to the wavelength of the operating frequency of the at least one antenna.
